# EUROPEAN PATENT APPLICATION

(11) **EP 4 539 344 A1**
(43) Date of publication of application: **16.04.2025**
(21) Application number: 24205288.4
(22) Date of filing: 08.10.2024
(51) Int. Cl.: H04B 1/3822, H04W 52/24

(54) **INFORMATION TRANSFER FROM TELECOMMUNICATION CONTROL UNITS TO COMPENSATORS WITH TIME-KEYING TRANSMIT/RECEIVE SWITCHING SIGNALS**

(30) Priority: 10.10.2023 US 202363543289 P
(71) Applicant: Molex CVS Hildesheim GmbH, 31135 Hildesheim (DE)
(72) Inventor: Hecht, Josef, Erlangen (DE); Jakob, Daniel, Nürnberg (DE); Meissner, Joerg, Altdorf (CH)
(74) Representative: Ter Meer Steinmeister & Partner

(57) **Abstract**

Methods, systems, and computer programs are presented for time-keying a transmit/receive switching signal. One method includes an operation for receiving, by a compensator, an input signal comprising a pilot tone signal and an operating signal. Further, the method includes operations for detecting a transmit period based on the pilot tone signal, and measuring a pilot tone gap within the transmit period where the pilot tone signal is off. The method further includes generating an internal transmit-on signal based on the pilot tone signal. The internal transmit-on signal is active during the pilot tone gap to keep the compensator in transmit mode during the pilot tone gap. Further, the output power level of the compensator is adjusted based on the pilot tone gap.

## Description

### TECHNICAL FIELD

This disclosure generally relates to information transfer from Telecommunication Control Units (TCUs) to compensators with time-keying transmit/receive (TX/RX) switching signals.

### BACKGROUND

As motor vehicles become more data-driven, the need to communicate with the external world becomes increasingly important. Individuals in vehicles often rely on personal mobile devices for streaming music, communication with others, and navigation. The motor vehicles themselves can also be in contact with external systems. Such communication allows for getting over-the-air updates from a central server, information about external conditions relevant to the vehicle through vehicle-to-everything (V2X) communication, and navigational information. If the vehicle is intended to have autonomous driving features, then having the ability to provide sensed data to a central server can allow for the receipt of improved driving algorithms. Thus, there are numerous reasons for providing data to and from a motor vehicle.

As can be appreciated, however, the design of a vehicle is poorly suited to transmit RF signals as the substantial use of metal acts to significantly attenuate the signals. To account for the attenuation, a compensator or signal-amplifier device (e.g., a Molex Compenser^{™} signal-amplifier device, C) can be provided to eliminate signal loss inside the vehicle.

### SUMMARY

Thus, it is object to provide a method and a compensator improving the signal transmission and reception behavior inside vehicles.

This section provides a general summary of the disclosure and is not a comprehensive disclosure of its full scope or all of its features.

Exemplary embodiments are disclosed of methods, systems, and devices configured for time-keying a transmit/receive (TX/RX) switching signal (e.g., pilot tone signal, pulses on a phantom power supply, other modulation on the coaxal connecting cable, etc.) transmitted from a first device (e.g., a Telecommunication Control Unit (TCU), etc.) to a second device (e.g., a compensator, etc.).The object is solved by the features of the independent claims. Preferred embodiments are given in the dependent claims.

According to one aspect a method is provided, comprising: receiving, by a compensator, an input signal comprising a pilot tone signal and an operating signal; detecting a transmit period based on the pilot tone signal; measuring a pilot tone gap within the transmit period where the pilot tone signal is off; generating an internal transmit-on signal based on the pilot tone signal, the internal transmit-on signal being active during the pilot tone gap to keep the compensator in transmit mode during the pilot tone gap; and adjusting an output power level of the compensator based on the pilot tone gap.

In one or more embodiments, a duration of the pilot tone gap may be proportional to the output power level requested from the compensator.

In one or more embodiments, the pilot tone gap may be measured by a timer in the compensator.

In one or more embodiments, an input power received by the compensator may be measured by a measuring unit in the compensator.

In one or more embodiments, the internal transmit-on signal may be generated by a reconstructor in the compensator.

In one or more embodiments, a comparator in the compensator may regulate the output power level based on the input power measured by the measuring unit and a requested output power based on a duration of the pilot tone gap.

In one or more embodiments, an output signal from the comparator may be sent to a low pass filter that is part of a power-control loop used to adjust an output of an attenuator in a transmit/receive path.

In one or more embodiments, a maximum duration of the pilot tone gap may be less than a duration of a shortest possible transmit frame.

In one or more embodiments, the method may further comprise detecting a first subgap and a second subgap, within the pilot tone gap, separated by a period where the pilot tone signal is on; and detecting an error in transmission based on the durations of the first subgap and the second subgap being different by a value that exceeds a predetermined threshold.

In one or more embodiments, the first subgap and the second subgap may be measured by a timer in a control unit of the compensator in real time.

In one or more embodiments, the compensator may comprise a vehicle-to-everything (V2X) communication compensator or a cellular to V2X compensator.

In one or more embodiments, the input signal further may comprise a direct current (DC) phantom supply.

In one or more embodiments, the pilot tone signal may have a frequency of 125 megahertz, wherein the operating signal has a frequency of 5.9 gigahertz.

In another aspect a compensator is provided, comprising: a signal splitter configured to receive an input signal comprising a pilot tone signal and an operating signal; a receive/transmit detector configured to detect a transmit period based on the pilot tone signal; a timer configured to measure a pilot tone gap within the transmit period where the pilot tone signal is off; a reconstructor configured to generate an internal transmit-on signal based on the pilot tone signal, the internal transmit-on signal being active during the pilot tone gap to keep the compensator in transmit mode during the pilot tone gap; and a comparator configured to adjust an output power level of the compensator based on the pilot tone gap.

In one or more embodiments, the compensator may further comprise a measuring unit configured for measuring an input power received by the compensator.

In one or more embodiments, the compensator may further comprise a low pass filter configured to receive an output signal from the comparator, the low pass filter being part of a power-control loop used to adjust an output of an attenuator in a transmit/receive path.

In one or more embodiments, a maximum duration of the pilot tone gap may be less than a duration of a shortest possible transmit frame.

In one or more embodiments, the compensator may comprise a vehicle-to-everything (V2X) communication compensator or a cellular to V2X compensator.

Further areas of applicability will become apparent from the description provided herein. The description and specific examples in this summary are intended for purposes of illustration only and are not intended to limit the scope of the present disclosure.

### BRIEF DESCRIPTION OF THE DRAWINGS

The present application is illustrated by way of example and not limited to the accompanying figures where like reference numerals indicate similar elements.
**FIG. 1** illustrates an example of a compensator (e.g., a Molex Compenser^{™} signal-amplifier device, etc.) connected with a Telecommunication Control Unit (TCU) within a vehicle.
**FIG. 2** is a block diagram of a system that includes a compensator with a time-keying feed-forward loop configured for time-keying a transmit/receive (TX/RX) switching signal, according to an exemplary embodiment.
**FIG. 3** illustrates the internal timings of a compensator, including a time-keying feed-forward loop configured for time-keying a TX/RX switching signal, according to an exemplary embodiment of the present disclosure.
**FIG. 4** is a flowchart of a method for time-keying a transmit/receive switching signal, according to some embodiments.

### DETAILED DESCRIPTION

The detailed description that follows describes exemplary embodiments, and the features disclosed are not intended to be limited to the expressly disclosed combinations. Therefore, unless otherwise noted, features disclosed herein may be combined to form additional combinations that were not otherwise shown for purposes of brevity.

Time keying is a technique for controlling the timing of signals used to control or encode information. Time-keying transmit/receive switching signals is a technique for managing the timing of signals for transmitting and receiving data.

In various types of communication equipment, such as radios or transceivers, a single antenna is often used for both transmitting and receiving signals. However, transmitting and receiving cannot occur simultaneously on the same antenna without interference.

Time-keying switching is used to switch the system between transmit and receive modes alternately. The timing signals, often referred to as switching signals, control when the system transmits data and when the system receives data.

For systems where a single channel or resource is shared between multiple operations (like in a shared antenna system for both transmitting and receiving), time keying controls the exact moments when the switch between the two modes of operation happens, ensuring that each operation occurs at its designated time without overlap.

For example, in Time Division Multiplexing (TDM) or Time Division Duplexing (TDD), time keying is used to switch between different operations (e.g., transmitting and receiving) based on precise timing. For example, in a TDD system, the transmitter and receiver share the same frequency channel but operate at different times, with time keying controlling when the switch occurs between transmitting and receiving.

For time-keyed modulation, time keying is used to encode data into a signal by varying the timing of certain signal events. For instance, in a simple form of pulse modulation, the presence or absence of a pulse in a given time slot could represent different bits of data.

In some aspects, a compensator, also referred to as a signal-amplifier device, eliminates signal loss inside a vehicle. The compensator (e.g., dedicated short-range communications (DSCR), V2X, cellular to V2X (c-V2X) compensator, etc.) is used to compensate for cable loss between a Telecommunication Control Unit (TCU) and an antenna. Although some examples are described with reference to using the compensator in a vehicle, the same principles may be used in any situation where cable loss is a problem in systems with transmit/receive switching signals.

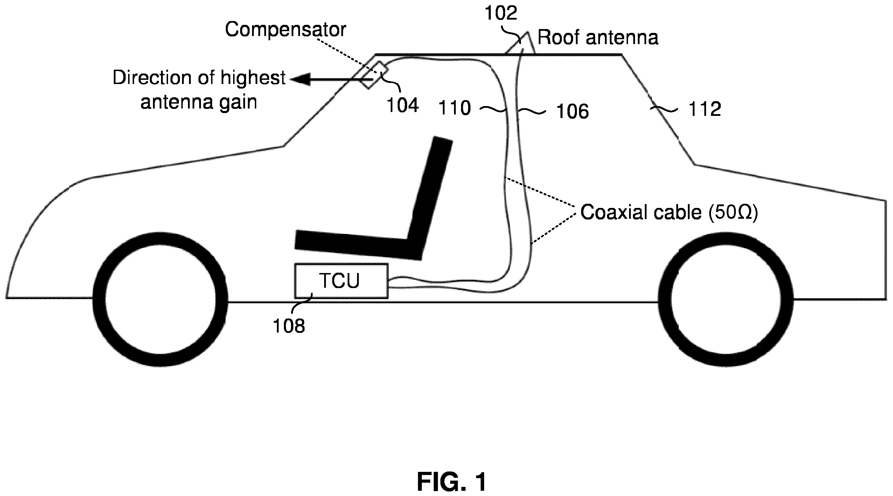

**FIG. 1** illustrates a compensator 104 (e.g., a Molex Compenser^{™} signal-amplifier device, etc.) that is connected to a TCU 108 within a vehicle 112. The compensator 104 is a bidirectional signal-amplifier device. Although some examples are described with reference to Molex equipment, the same principles may be used for any other type of TCU.

A transmit/receive compensator 104 is a device or circuit used to improve the performance of both the transmission and reception of signals. The compensator helps to correct or adjust for various imperfections and distortions in the signals that can occur during the transmission and reception processes.

During transmission, the compensator 104 may adjust the power level of the transmitted signal to ensure it is strong enough to reach the receiver without being too strong, which could cause interference or signal distortion. The compensator may also linearize the power amplifier to reduce distortion in the transmitted signal. Furthermore, the compensator can ensure that the impedance of the transmission line is matched to the transmitter's output impedance to minimize reflections and power loss.

During reception, the compensator 104 adjusts the gain of the received signal to ensure that the signal is neither too weak nor too strong. Further, the compensator 104 filters out noise and unwanted signals, improving the signal-to-noise ratio (SNR) and making the received signal clearer. Further, the compensator 104 can correct phase and frequency errors introduced during transmission, helping to align the received signal with the original transmitted signal.

In the illustrated example, the compensator 104 is located on or adjacent to the windshield of the vehicle 112 (e.g., behind the rearview mirror, etc.) to provide communication with vehicles ahead and other devices nearby in the area where the vehicle is traveling or standing. The compensator 104 also interacts with an antenna 102 (e.g., rooftop-mounted antenna, etc.). A cable 110 connects the compensator 104 to the TCU 108, and a cable 106 connects the TCU 108 to the antenna 102.

The data transferred may be used for safety, navigation, and autonomous driving purposes. Although the compensator 104 and the TCU 108 are respectively shown along the vehicle's windshield and underneath a seat, the compensator 104 and the TCU 108 may be positioned elsewhere. For example, the TCU 108 may be located on the vehicle roof or under the vehicle dashboard instead of under a vehicle seat, and the compensator 104 can also be located at other locations such as in the roof antenna, in the front grill, or near a rear portion of the vehicle, without limitation.

The system that includes the TCU 108, the cables 106, 110, and the compensator 104 is preferably configured to be standard-compliant. In addition to other parameters, the output power of the compensator 104 is preferably controlled in the compensator 104 to be within standard-defined limits. Therefore, the gain of the compensator 104 is preferably adjusted such that the system's cable loss, temperature, and frequency response are compensated. To achieve this, a feed-forward loop may be used in which the TCU 108 sends the requested output power to the compensator 104, and the compensator 104 is configured (for example, without limitation, with local closed-loop feedback measured after the compensator) to ensure the resulting output matches the requested power level. Information, including the requested output power from the TCU 108 to the compensator 104, may be sent in various ways, such as by implementing a serial protocol, a parallel protocol, etc.

Disclosed herein are exemplary embodiments of methods, systems, and devices (e.g., circuits, compensators, signal-amplifier devices, etc.) configured to be operable for exchanging information between the TCU 108 and the compensator 104 (e.g., a V2X compensator, c-V2X compensator, etc.) by time-keying a transmit/receive switching signal. Advantageously, exemplary embodiments disclosed herein provide a cost-effective and alternative way of transferring information from the TCU 108 to the compensator 104 by time-keying the TX/RX switching signal, which may be implemented by using a non-complex timer in a control unit of the compensator 104, according to some examples.

A switching signal is a type of electrical signal used to control the operation of electronic circuits, devices, or systems by turning them on or off, or by switching them between different states. This signal is typically digital or binary, meaning it can have one of two possible values: high (1) or low (0), corresponding to an "on" or "off' state, respectively. Switching signals are often represented by a voltage level that is either high (e.g., +5V, +3.3V) or low (e.g., 0V, ground). The switching signal is used to control the operation of another circuit or device. For example, it might turn a transistor on or off, enable or disable a certain function in a microcontroller, or switch between different modes of operation in a larger system. Switching signals can occur at specific times or frequencies. For instance, in a pulse-width modulation (PWM) system, the switching signal determines the duty cycle, which controls the amount of power delivered to a load. Switching signals are used in circuits such as power supplies, amplifiers, digital logic circuits, and communication systems and can be used to switch power to different components, modulate signals, or control the flow of data in digital systems.

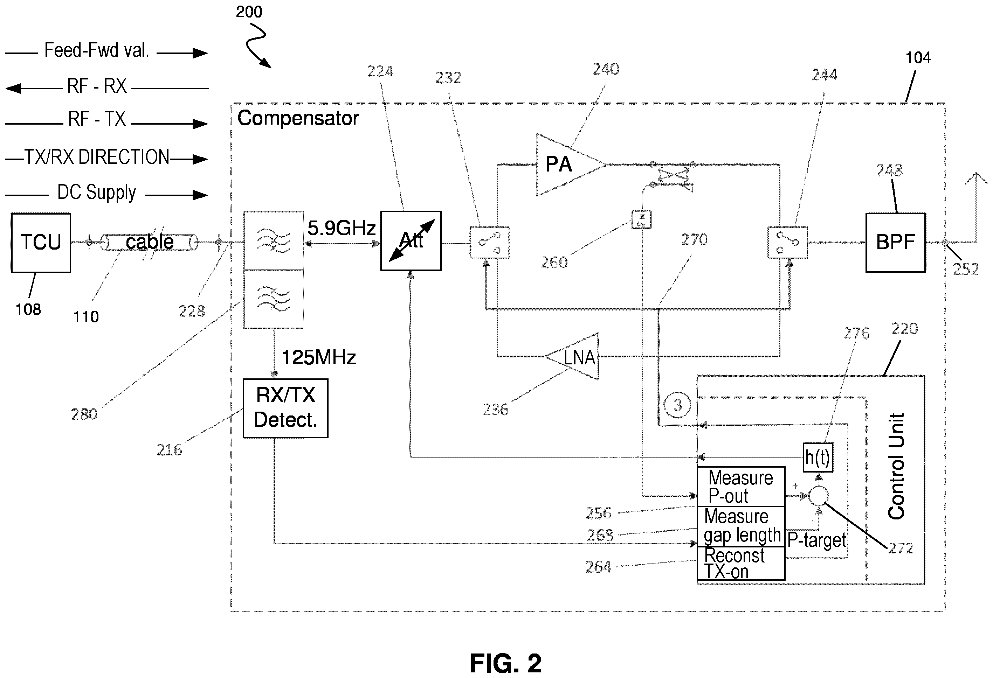

**FIG. 2** is a block diagram of a system 200 that includes the compensator 104 with a time-keying feed-forward loop configured for time-keying a transmit/receive switching signal, according to an exemplary embodiment.

The compensator 104 includes several components to manage the RF signals. The compensator 104 is coupled with the TCU 108 via the cable 110. In this exemplary embodiment, the compensator 104 includes a time-keying feed-forward loop configured to be operable for time-keying the transmit/receive switching signal. In some examples, the compensator 104 may comprise a V2X compensator, a c-V2X compensator, etc., but other examples may use other types of compensators.

The compensator 104 is configured to be operable for using a pilot tone signal (broadly referred to as the transmit/receive switching signal) from the TCU 108, which indicates that the transmit (TX) mode is active. The compensator 104 includes a receive/transmit (RX/TX) detector 216 and a control unit 220 coupled with the receive/transmit detector 216. In other exemplary embodiments, the compensator 104 may be configured to be operable for using other transmit/receive switching signals, such as pulses on a phantom power supply, other modulation on the coaxal connecting cable 110, etc.

The input signal 228 is processed by signal splitter 280 and an attenuator 224 to condition the signal for further processing. The receive/transmit detector 216 is coupled to the signal splitter 280 to receive the RF signals and determine the mode of operation (transmit or receive).

The compensator 104 further includes a first switch 232 coupled with the attenuator 224, a low-noise amplifier 236 (LNA), a power amplifier 240 (PA), and a second switch 244. The second switch 244 is coupled with the first switch 232, the low-noise amplifier 236, the power amplifier 240, and a bandpass filter 248 (BPF).

The bandpass filter 248 is also coupled with an output 252 of the compensator 104. In some examples, the signal on input signal 228 includes three signal domains: the operating signal (e.g., at about 5.9GHz), the pilot tone signal (e.g., 125MHz), and a DC phantom supply. The frequencies of 5.9GHz and 125MHz are examples only as exemplary embodiments disclosed herein are not limited to any particular frequencies.

The pilot tone signal is a continuous, low-level signal of a specific frequency that is used as a reference or control signal. The pilot tone typically does not carry any information itself but plays a role in maintaining the quality and reliability of the transmitted or processed signal. The DC phantom supply signal, also referred to as phantom power, delivers a DC voltage through the same wires that carry other signals.

The signal splitter 280 splits the three signals of the three domains using a passive filter. The separated pilot tone signal is rectified in the receive/transmit detector 216 and then analyzed in control unit 220. For practical reasons, it is helpful if the operating band and pilot tone signal frequency have a significant difference to facilitate signal separation in the second device.

In the transmit path, the conditioned RF signal is amplified by the power amplifier 240 before being routed through the second switch 244 to the bandpass filter 248 that filters the amplified signal for transmission through an antenna coupled to the output 252.

In the receive path, signals received by the antenna are filtered by the BPF 248 and routed through the second switch 244 to the low-noise amplifier 236 for amplification. The amplified signal is then directed back to the attenuator 224 on its way to the signal splitter 280 and output to the cable 110 and the TCU 108.

The control unit 220 within the compensator 104 includes a measuring unit 256, a timer 268, a reconstructor 264, a comparator 272, and a low pass filter 276. The control unit 220 is coupled with the receive/transmit detector 216 and a diode detector 260, which is an electronic circuit that uses a diode to detect or demodulate signals.

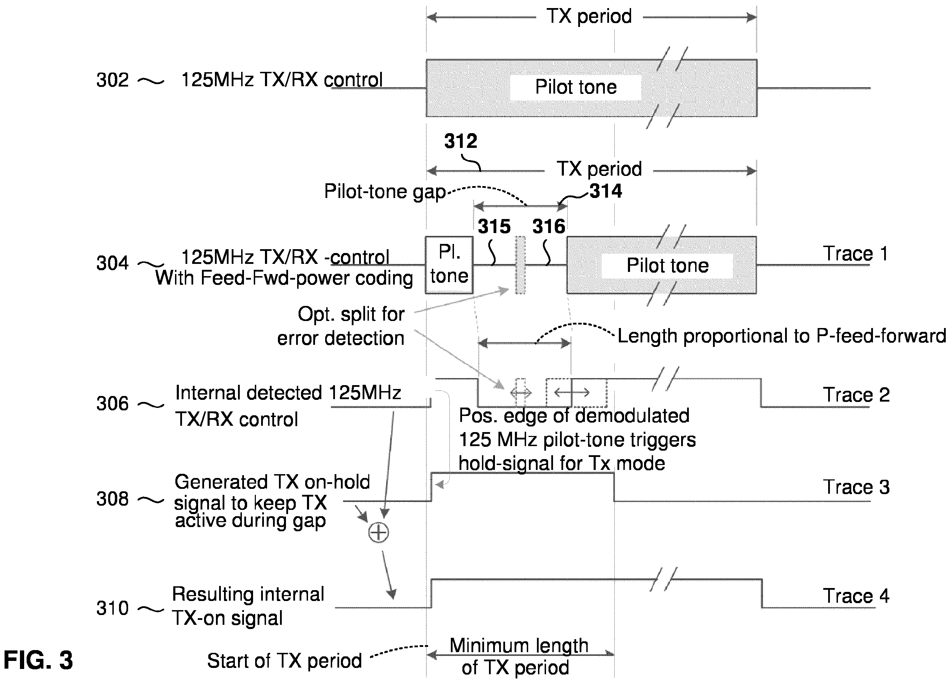

The control unit 220 is configured to hold a TX-on signal active during a pilot tone signal time gap and measure its length. More details on the pilot-tone gap are described below with reference to **FIG. 3****.** A TX-on signal is used to indicate that the transmitter is active and transmitting data. The TX-on is only active when sending data and turned off when not sending data to conserve power and reduce interference.

The measuring unit 256 is for measuring the electrical current of the output power from the TCU 108 to the compensator 104. The reconstructor 264 is for reconstructing the TX-on signal, and the timer 268 measures the pilot-tone gap. The reconstructed TX-on signal from the reconstructor 264 is transmitted to a node 270 to set the first switch 232 and the second switch 244 in the transmit/receive path.

The digital value of the gap length, representing the target power, is compared in comparator 272 with the actual measured RF power provided by the measuring unit 256. The comparator 272 is a circuit where the target power is subtracted from the actual power to achieve a regulation criterion for the control loop. The output signal from the comparator 272 passes a low pass filter 276 and closes the power-control loop by adjusting the output of the attenuator 224.

The control unit 220 includes a feedback loop with a function h(t) that compares the measured power output with a target power (P-target) to control the time response of the control loop dynamically.

**FIG. 3** illustrates the internal timings of the compensator, including the time-keying feed-forward loop configured to be operable for time-keying the transmit/receive switching signal, according to an exemplary embodiment. The example illustrated in **FIG. 3** includes a compensator internal timing in which a transmit/receive control signal 302 (e.g., a 125 MHz pilot tone signal from the TCU) is not switched off and remains on during the entire transmit period 312 (TX period).

In the approach shown in **FIG. 3****,** the compensator is configured to receive a pilot tone signal 304 (e.g., 125MHz) from the TCU as an indicator that the transmit (TX) mode is active or inactive. As shown by Trace 1 in **FIG. 3****,** the pilot tone signal 304 is switched off for a certain period after TX mode is activated. This period is referred to as the pilot-tone gap 314.

The duration of the pilot-tone gap 314 (during which the pilot tone signal 304 is switched off) is proportional to the requested output power of the compensator. In some examples, the maximum duration of the pilot-tone gap 314 is less than the duration of the shortest possible transmit frame. Further, the duration of the pilot-tone gap 314 is measured by the timer 268 of the control unit 220 in the compensator 104.

The pilot tone signal 304 is demodulated via the receive/transmit detector 216 and the reconstructor 264 in the control unit 220 of the compensator 104. A signal 306 (Trace 2) is the signal resulting from demodulating the pilot tone signal 304. The signal 306 is "off" (low voltage) during the pilot-tone gap 314. However, the duration of the off period on the signal 306 may vary and can be adjusted via the feed-forward loop, so the off period of the signal 306 may end before or after the end of the pilot-tone gap 314.

To improve the robustness of the evaluation of the pilot-tone gap 314 duration, the pilot-tone gap 314 is optionally split into two parts of equal duration (subgap 315 and subgap 316) for error detection. The subgap 315 and 316 are separated by a period where the pilot tone signal 304 is on. The evaluation result is considered valid when the difference between the measured durations of subgap 315 and subgap 316 is within a predetermined threshold limit.

The error detection circuit can be used in several ways depending on the application and the type of system. The error detection may be used for several purposes:
- Error correction, e.g., automatic correction if the system includes error correction capabilities (such as in digital communication systems with error-correcting codes). For example, if a parity check fails, the system might use additional data bits to correct the error.
- Request for retransmission to request a retransmission of the data from the sender.
- Error flagging to trigger an indicator, such as a Light Emitting Diode (LED) or an alarm, to notify users that an error has been detected or to log the error in a system.
- System recovery to reset the system or a component that may have caused the error, or for fallback mode, where the output can initiate a switch to a fallback or safe mode.
- Fault tolerance in systems with redundant components, or error masking to mask the error and continue operation, possibly with degraded performance, until the issue can be resolved.
- User feedback, e.g., an error may trigger a display or screen message to inform the user of the specific error that has been detected, or a sound alert.

In the illustrated example, the time durations of the subgap 315 and subgap 316 are compared during detection. In some examples, the lengths of the two signal gaps are measured in real time by gating a control unit internal timer.

To avoid the transmit mode (TX-on mode) deactivating or turning off during the pilot-tone gap 314, an internal hold-signal 308 (Trace 3) is used to take over the TX-activation during the pilot-tone gap 314. The internal hold-signal 308 has a minimum duration equal to the minimum TX-burst time duration.

In some examples, the duration of the on period of the internal hold-signal 308 is configured to keep TX on during the feed-forward pilot-tone gap 314. Therefore, although there is the pilot-tone gap 314, the TX-on mode is maintained through the pilot-tone gap 314.

The combination (e.g., adding or using a logical OR function) of the signal 306 and the internal hold-signal 308 results in the internal TX-on signal 310 (Trace 4), which is the internal TX-on signal that covers the minimum length of the TX-on.

Therefore, the internal TX-on signal 310 "masks" the fact that the pilot tone signal 304 includes a gap, so the transmission lasts for at least the minimum length required.

The signal 306 is used to control the attenuator 224; that is, the value of the signal 306 is used to control the power output of the attenuator 224. This means that the pilot-tone gap 314 and the forward loop are used to control the power of the attenuator. The TCU may control the pilot-tone gap 314 to direct the compensator to adjust the power level of the signal.

Accordingly, exemplary embodiments are disclosed of methods, systems, and devices configured for time-keying a transmit/receive switching signal (e.g., pilot tone signal 304, pulses on a phantom power supply, other modulation on the coaxal connecting cable, etc.) transmitted from a first device (e.g., a TCU, etc.) to a second device (e.g., compensator, etc.).

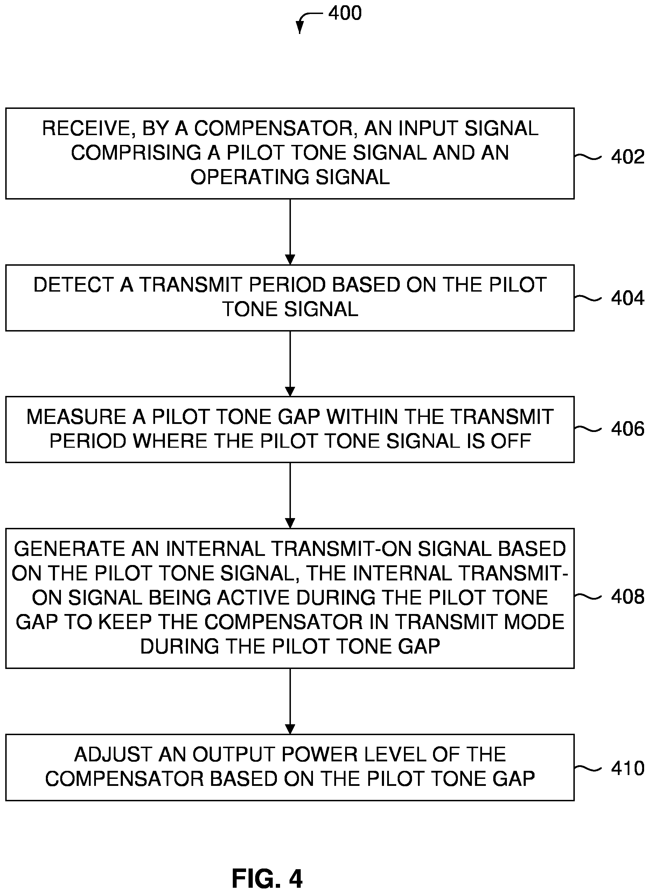

**FIG. 4** is a flowchart of a method 400 for time-keying a transmit/receive switching signal, according to some embodiments. While the various operations in this flowchart are presented and described sequentially, one of ordinary skill will appreciate that some or all of the operations may be executed in a different order, be combined or omitted, or be executed in parallel.

Operation 402 is for receiving, by the compensator, an input signal comprising a pilot tone signal and an operating signal.

From operation 402, the method 400 flows to operation 404 for detecting a transmit period based on the pilot tone signal.

From operation 404, the method 400 flows to operation 406 for measuring a pilot tone gap within the transmit period where the pilot tone signal is off.

From operation 406, the method 400 flows to operation 408 for generating an internal transmit-on signal based on the pilot tone signal. The internal transmit-on signal is active during the pilot tone gap to keep the compensator in transmit mode during the pilot tone gap.

From operation 408, the method 400 flows to operation 410 for adjusting an output power level of the compensator based on the pilot tone gap.

Given the disclosure above, various examples are set forth below. It should be noted that one or more features of an example, taken in isolation or combination, should be considered within the disclosure of this application.

In some examples, a duration of the pilot tone gap is proportional to the output power level requested from the compensator.

In some examples, the pilot tone gap is measured by a timer in the compensator, where an input power received by the compensator is measured by a measuring unit in the compensator, and the internal transmit-on signal is generated by a reconstructor in the compensator.

In some examples, a comparator in the compensator regulates the output power level based on the input power measured by the measuring unit and a requested output power based on a duration of the pilot tone gap.

In some examples, an output signal from the comparator is sent to a low pass filter that is part of a power-control loop used to adjust an output of an attenuator in a transmit/receive path.

In some examples, a maximum duration of the pilot tone gap is less than a duration of a shortest possible transmit frame.

In some examples, the method 400 further comprises detecting a first subgap and a second subgap, within the pilot tone gap, separated by a period where the pilot tone signal is on; and detecting an error in transmission based on the durations of the first subgap and the second subgap being different by a value that exceeds a predetermined threshold.

In some examples, the first subgap and the second subgap are measured by a timer in a control unit of the compensator in real time.

In some examples, the compensator comprises a vehicle-to-everything (V2X) communication compensator or a cellular to V2X compensator.

In some examples, the input signal further comprises a direct current (DC) phantom supply, where the pilot tone signal has a frequency of 125 megahertz, and the operating signal has a frequency of 5.9 gigahertz.

Another general aspect is for a compensator that comprises a signal splitter configured to receive an input signal comprising a pilot tone signal and an operating signal; a receive/transmit configured to detect a transmit period based on the pilot tone signal; a timer configured to measure a pilot tone gap within the transmit period where the pilot tone signal is off; a reconstructor configured to generate an internal transmit-on signal based on the pilot tone signal, the internal transmit-on signal being active during the pilot tone gap to keep the compensator on transmit mode on during the pilot tone gap; and a comparator configured to adjust an output power level of the compensator based on the pilot tone gap.

In some examples, the duration of the pilot tone gap is proportional to the output power level requested from the compensator.

In some examples, the compensator further comprises a measuring unit configured for measuring an input power received by the compensator.

In some examples, the comparator regulates the output power level based on an input power measured by the measuring unit and a requested output power based on a duration of the pilot tone gap.

In some examples, the compensator further comprises a low pass filter configured to receive an output signal from the comparator. The low pass filter is part of a power-control loop used to adjust an output of an attenuator in a transmit/receive path.

In some examples, a maximum duration of the pilot tone gap is less than a duration of a shortest possible transmit frame.

In some examples, the comparator is configured for detecting a first subgap and a second subgap, within the pilot tone gap, separated by a period where the pilot tone signal is on; and detecting an error in transmission based on the durations of the first subgap and the second subgap being different by a value that exceeds a predetermined threshold.

In some examples, the first subgap and the second subgap are measured by a timer in a control unit of the compensator in real time.

In some examples, the compensator comprises a vehicle-to-everything (V2X) communication compensator or a cellular to V2X compensator.

In some examples, the input signal further comprises a direct current (DC) phantom supply, the pilot tone signal has a frequency of 125 megahertz, and the operating signal has a frequency of 5.9 gigahertz.

Throughout this specification, plural instances may implement components, operations, or structures described as a single instance. Although individual operations of one or more methods are illustrated and described as separate operations, one or more of the individual operations may be performed concurrently, and nothing requires that the operations be performed in the order illustrated. Structures and functionality presented as separate components in example configurations may be implemented as a combined structure or component. Similarly, structures and functionality presented as a single component may be implemented separately. These and other variations, modifications, additions, and improvements fall within the scope of the subject matter herein.

The examples illustrated herein are described in sufficient detail to enable those skilled in the art to practice the teachings disclosed. Other examples may be used and derived therefrom, such that structural and logical substitutions and changes may be made without departing from the scope of this disclosure. The Detailed Description, therefore, is not to be taken in a limiting sense, and the scope of various examples is defined only by the appended claims, along with the full range of equivalents to which such claims are entitled.

Additionally, as used in this disclosure, phrases of the form "at least one of an A, a B, or a C," "at least one of A, B, and C," and the like should be interpreted to select at least one from the group that comprises "A, B, and C." Unless explicitly stated otherwise in connection with a particular instance, in this disclosure, this manner of phrasing does not mean "at least one of A, at least one of B, and at least one of C." As used in this disclosure, the example "at least one of an A, a B, or a C" would cover any of the following selections: {A}, {B}, {C}, {A, B}, {A, C}, {B, C}, and {A, B, C}.

Moreover, plural instances may be provided for resources, operations, or structures described herein as a single instance. Additionally, boundaries between various resources, operations, modules, engines, and data stores are somewhat arbitrary, and particular operations are illustrated in the context of specific illustrative configurations. Other allocations of functionality are envisioned and may fall within the scope of various examples of the present disclosure. In general, structures and functionality are presented as separate resources in the example; configurations may be implemented as a combined structure or resource. Similarly, structures and functionality presented as a single resource may be implemented as separate resources. These and other variations, modifications, additions, and improvements fall within a scope of examples of the present disclosure as represented by the appended claims. Accordingly, the specification and drawings are to be regarded in an illustrative rather than a restrictive sense.

## Claims

1. A method comprising:
receiving, by a compensator, an input signal comprising a pilot tone signal and an operating signal;
detecting a transmit period based on the pilot tone signal;
measuring a pilot tone gap within the transmit period where the pilot tone signal is off;
generating an internal transmit-on signal based on the pilot tone signal, the internal transmit-on signal being active during the pilot tone gap to keep the compensator in transmit mode during the pilot tone gap; and
adjusting an output power level of the compensator based on the pilot tone gap.

2. The method as recited in claim 1, wherein a duration of the pilot tone gap is proportional to the output power level requested from the compensator.

3. The method as recited in claim 1 or 2, wherein the pilot tone gap is measured by a timer in the compensator, wherein an input power received by the compensator is measured by a measuring unit in the compensator, wherein the internal transmit-on signal is generated by a reconstructor in the compensator.

4. The method as recited in claim 3, wherein a comparator in the compensator regulates the output power level based on the input power measured by the measuring unit and a requested output power based on a duration of the pilot tone gap.

5. The method as recited in claim 4, wherein an output signal from the comparator is sent to a low pass filter that is part of a power-control loop used to adjust an output of an attenuator in a transmit/receive path.

6. The method as recited in any one of the preceding claims, wherein a maximum duration of the pilot tone gap is less than a duration of a shortest possible transmit frame.

7. The method as recited in any one of the preceding claims, further comprising:
detecting a first subgap and a second subgap, within the pilot tone gap, separated by a period where the pilot tone signal is on; and
detecting an error in transmission based on the durations of the first subgap and the second subgap being different by a value that exceeds a predetermined threshold.

8. The method as recited in claim 7, wherein the first subgap and the second subgap are measured by a timer in a control unit of the compensator in real time.

9. The method as recited in any one of the preceding claims, wherein the compensator comprises a vehicle-to-everything (V2X) communication compensator or a cellular to V2X compensator.

10. The method as recited in any one of the preceding claims, wherein the input signal further comprises a direct current (DC) phantom supply, wherein the pilot tone signal has a frequency of 125 megahertz, wherein the operating signal has a frequency of 5.9 gigahertz.

11. A compensator comprising:
a signal splitter configured to receive an input signal comprising a pilot tone signal and an operating signal;
a receive/transmit detector configured to detect a transmit period based on the pilot tone signal;
a timer configured to measure a pilot tone gap within the transmit period where the pilot tone signal is off;
a reconstructor configured to generate an internal transmit-on signal based on the pilot tone signal, the internal transmit-on signal being active during the pilot tone gap to keep the compensator in transmit mode during the pilot tone gap; and
a comparator configured to adjust an output power level of the compensator based on the pilot tone gap.

12. The compensator as recited in claim 11, further comprising:
a measuring unit configured for measuring an input power received by the compensator, preferably the comparator is configured regulates the output power level based on an input power measured by the measuring unit and a requested output power based on a duration of the pilot tone gap.

13. The compensator as recited in claim 11 or 12, further comprising:
a low pass filter configured to receive an output signal from the comparator, the low pass filter being part of a power-control loop used to adjust an output of an attenuator in a transmit/receive path.

14. The compensator as recited in any one of the claims 11, 12 or 13, wherein the comparator is configured for:
detecting a first subgap and a second subgap, within the pilot tone gap, separated by a period where the pilot tone signal is on; and
detecting an error in transmission based on the durations of the first subgap and the second subgap being different by a value that exceeds a predetermined threshold,
preferably the first subgap and the second subgap are measured by a timer in a control unit of the compensator in real time.

15. At least one machine-readable media including instructions that, when executed by a machine, cause the machine to perform any method of claims 1-10.
